(19) Europäisches Patentamt / European Patent Office / Office européen des brevets

(11) **EP 3 147 981 B1**

(12) **EUROPEAN PATENT SPECIFICATION**

(45) Date of publication and mention
of the grant of the patent:
**23.05.2018 Bulletin 2018/21**

(51) Int Cl.:
*H01M 8/0612* (2016.01)    *H01M 8/0662* (2016.01)

(21) Application number: **16186502.7**

(22) Date of filing: **31.08.2016**

(54) **FUELL CELL SYSTEM**

BRENNSTOFFZELLSYSTEM

SYSTÈME DE PILES À COMBUSTIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2015 JP 2015188252**

(43) Date of publication of application:
**29.03.2017 Bulletin 2017/13**

(73) Proprietor: **AISIN SEIKI KABUSHIKI KAISHA
Kariya-shi, Aichi 448-8650 (JP)**

(72) Inventors:
• **HIGO, Takayuki
Kariya-shi, Aichi 448-8650 (JP)**

• **IWAMI, Jun
Osaka-shi, Osaka 541-0046 (JP)**
• **MIDO, Toshiya
Osaka-shi, Osaka 541-0046 (JP)**

(74) Representative: **TBK
Bavariaring 4-6
80336 München (DE)**

(56) References cited:
**EP-A1- 2 840 061      JP-A- 2011 159 485
JP-A- 2014 058 426   US-A1- 2003 118 881**

**Description**

TECHNICAL FIELD

This disclosure generally relates to a fuel cell system.

BACKGROUND DISCUSSION

An example of a fuel cell system is disclosed, for example, in JP 2011-159485 A which is hereinafter referred to as Reference 1. The fuel cell system disclosed in Reference 1 includes a desulfurizer removing a sulfur component within a source material for reforming (source material) supplied through a source material supply passage, a reformer reforming the source material in which the sulfur component is removed, and a fuel cell stuck performing a power generation by oxidation and reduction of the source material and oxidant. The aforementioned fuel cell system includes a recycle passage returning a portion of a reformed gas serving as the source material which is reformed at the reformer to the desulfurizer so as to perform a desulfurization of the source material by the desulfurizer under a condition including hydrogen. A liquid drainer is provided at the recycle passage. The liquid drainer serves as a steam trap storing water in the reformed gas, i.e., drain water, resulting from condensation of the reformed gas because of cooling thereof. The drain water is discharged to an outside via a discharge passage from the liquid drainer.

According to the fuel cell system disclosed in Reference 1, with consideration for a breakage of the liquid drainer, a water sealing construction such as a U-shaped tube, for example, may be provided so that the reformed gas flowing through the recycle passage is inhibited from being discharged to the outside. In this case, an increase of the number of components may lead to a cost increase of the fuel cell system. Meanwhile, a reduction of cost is desired for increasing a penetration rate of the fuel cell system.

Another example of a fuel cell system is disclosed in Fig. 9 of EP 2 840 061 A1 which is hereinafter referred to as Reference 2. The fuel cell system disclosed in Reference 2 includes the features set out in the preamble of claim 1. A drain pipe sends drain water generated in a recycle gas pipe to a water tank. At start-up of the fuel cell system, if water is insufficient in the water tank, an on-off valve provided in the recycle gas pipe is closed and water is filled into the water tank to ensure a water seal structure that restrains reformed gas flowing through the recycle gas pipe from flowing into the drain pipe in a power generation operation of the fuel cell system.

A need exists for a fuel cell system where a portion of a reformed gas reformed at a reforming portion is recycled may be reduced in cost.

SUMMARY

According to an aspect of this disclosure, a fuel cell system includes a fuel cell generating an electric power by an oxidant gas and a reformed gas including a hydrogen, an evaporation portion generating a water vaporfrom a water for reforming, a reforming portion generating the reformed gas by a source material and the water vapor and supplying the reformed gas to the fuel cell, a desulfurizer removing a sulfur component contained in the source material by the hydrogen and supplying the source material in which the sulfur component is removed to the reforming portion, a recycle gas pipe connecting between a reformed gas supply pipe which supplies the reformed gas to the fuel cell from the reforming portion and a source material supply pipe which supplies the source material to the desulfurizer, the recycle gas pipe returning a portion of the reformed gas to the desulfurizer as a recycle fuel, a drain pipe including a drain water inlet port at a first end and a drain water outlet port at a second end, the drain water inlet port introducing a drain water generated at the recycle gas pipe, the drain water outlet port sending out the drain water, and a water tank storing therein the water for reforming and connected to the drain water outlet port at a lower side than the drain water inlet port, the water tank including a reform water inlet port introducing therein the drain water as the water for reforming, the water tank configured in a manner that a water level of the water tank is adjustable to be equal to or greater than a predetermined water level, the predetermined water level serving as a water level of the water tank obtained in a case where the reformed gas at a predetermined pressure related to a maximum pressure is applied to a boundary surface between the reformed gas and the water for reforming within the drain pipe and the boundary surface is positioned at a same height as a sealing water limit surface serving as a limit surface for the reformed gas not flowing into the water tank. The fuel cell system further includes a water level detection device detecting a water level of the water tank, an interruption device provided at the source material supply pipe and configured to interrupt a supply of the source material, and a control unit controlling at least the interruption device. The control unit includes an interruption control portion interrupting the supply of the source material by the interruption device in a case where the water level of the water tank detected by the water level detection device is smaller than the predetermined water level in a state where the reformed gas is introduced to the drain pipe from the recycle gas pipe.

Because the water level of the water tank is adjusted to be equal to or greater than the predetermined water level, the reformed gas is restrained from flowing out to the outside through the water tank by the reform water stored at the water tank. That is, a water sealing construction for the reformed gas may be obtained by the water tank and the drain pipe. Thus, a steam trap or a water sealing member such as a U-shaped tube, for example, is not necessary. The number of components may be reduced to decrease a cost of the fuel cell system.

Further, in a case where the water level of the water tank decreases below the predetermined water level in a state where the reformed gas is introduced to the drain pipe from the recycle gas pipe, the supply of the source material is interrupted by the interruption device, thereby restraining the reformed gas within the recycle gas pipe from flowing out to the outside.

The water tank may include a reform water discharge port discharging the reform water which is stored within the water tank to an outside, the reform water discharge port being positioned at a lower side than the drain water inlet port

Accordingly, even in a case where the boundary surface within the drain pipe increases by an increase of volume of reform water, the boundary surface is positioned at or below the reform water discharge port. The reform water discharge port is positioned at the lower side than the drain water inlet port. Thus, the reform water is inhibited from flowing into the recycle gas pipe and into the fuel supply pipe from the drain water inlet port. An auxiliary machinery such as a fuel pump, for example, provided at the fuel supply pipe is restrained from being affected by the reform water.

BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic view illustrating a fuel cell system according to a first embodiment disclosed here;
Fig. 2 is a cross-sectional view of a water tank, a drain pipe and a recycle gas pipe in Fig. 1 for illustrating a state where a reformed gas is not applied to a boundary surface in a case where a water volume within the water tank reaches a limit water volume;
Fig. 3 is a cross-sectional view of the water tank and the drain pipe in Fig. 1 for illustrating a state where the reformed gas at a predetermined pressure is applied to the boundary surface in a case where the water volume within the water tank reaches the limit water volume;
Fig. 4 is a cross-sectional view of the water tank and the drain pipe in Fig. 1 for illustrating a state where the reformed gas at a minimum pressure within a normal pressure range is applied to the boundary surface in a case where the water volume within the water tank reaches a predetermined water volume;
Fig. 5 is a cross-sectional view of the water tank, the drain pipe and the recycle gas pipe in Fig. 1 for illustrating a state where the reformed gas at the predetermined pressure is applied to the boundary surface in a case where the water volume within the water tank reaches the predetermined water volume;
Fig. 6 is a block diagram of the fuel cell system illustrated in Fig. 1;
Fig. 7 is a schematic view illustrating the fuel cell system according to a second embodiment disclosed here;
Fig. 8 is a schematic view illustrating the fuel cell system according to a third embodiment disclosed here; and
Fig. 9 is a cross-sectional view illustrating a modified example of the drain pipe according to each of the embodiments of the fuel cell system.

DETAILED DESCRIPTION

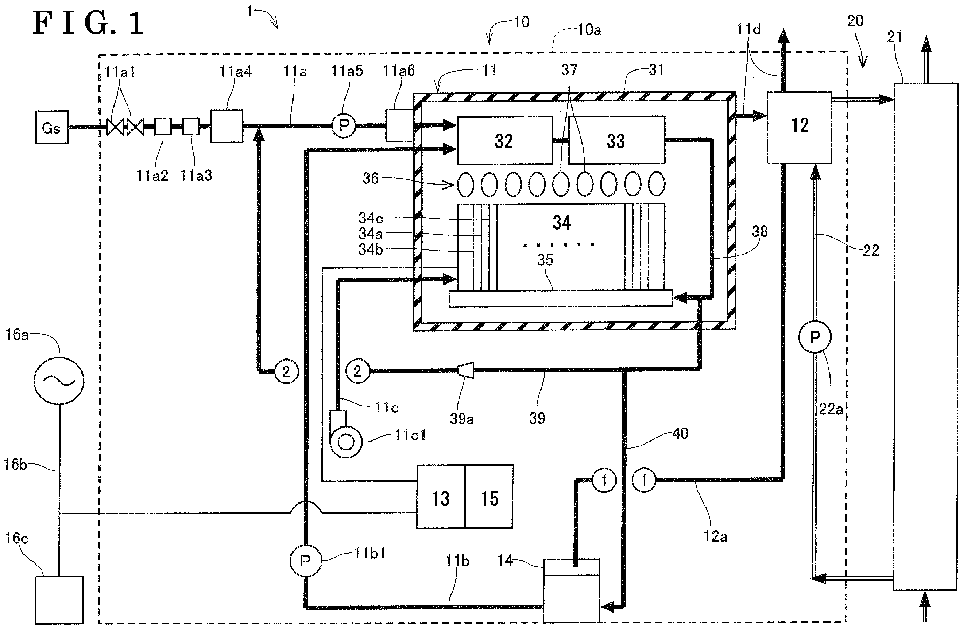

A fuel cell system according to a first embodiment is explained below. As illustrated in Fig. 1, a fuel cell system 1 includes a power generation unit 10 and a water storage tank 21. The power generation unit 10 includes a case 10a, a fuel cell module 11, a heat exchanger 12, an inverter device 13, a water tank 14 and a control unit 15.

The fuel cell module 11 at least includes a fuel cell 34. The fuel cell module 11 is supplied with a source material for reforming (source material), water for reforming (reform water) and cathode air. Specifically, the fuel cell module 11 is connected to a first end of a source material supply pipe (fuel supply pipe) 11a of which a second end is connected to a supply source Gs so that the fuel supply pipe 11a is supplied with the source material. The fuel cell module 11 is also connected to a first end of a water supply pipe 11b of which a second end is connected to the water tank 14 so that the water supply pipe 11b is supplied with the reform water. A reform water pump 11b1 is disposed at the water supply pipe 11b. The fuel cell module 11 is further connected to a first end of a cathode air supply pipe 11c of which a second end is connected to a cathode air blower 11c1 so that the cathode air supply pipe 11c is supplied with the cathode air.

The heat exchanger 12 is supplied with exhaust combustion gas emitted or discharged from the fuel cell module 11 and with storage water stored at the water storage tank 21 to perform a heat exchange between the exhaust combustion gas and the storage water. Specifically, the water storage tank 21 which stores water (hot or warmed water) serving as the storage water is connected to a water circulation line 22 (storage water circulation line) where the water (storage water) circulates in a direction indicated by arrows in Fig. 1. A storage water circulation pump 22a and the heat exchanger 12 are arranged at the water circulation line 22 in the mentioned order from a lower end to an upper end of the water storage tank 21. An exhaust pipe 11d from the fuel cell module 11 is connected to the heat exchanger 12 in a penetration manner. A first end of a condensed water supply pipe 12a is connected to the heat exchanger 12.

The exhaust combustion gas from the fuel cell module 11 is led to the heat exchanger 12 by flowing through the exhaust pipe 11d and is cooled at the heat exchanger 12 because of the heat exchange with the storage water. Water vapor in the exhaust combustion gas is thus condensed. The exhaust combustion gas after being cooled is emitted or discharged to the outside of the fuel cell system by flowing through the exhaust pipe 11d. Condensed water resulting from the condensation of the water vapor in the exhaust combustion gas is supplied to the water tank 14 by flowing through the condensed water supply pipe 12a. The water tank 14 brings the condensed water to be formed into pure water (deionized water) by means of ion-exchange resin.

The heat exchanger 12, the water storage tank 21 and the water circulation line 22 constitute an exhaust heat recovery system 20. The exhaust heat recovery system 20 recovers exhaust heat of the fuel cell module 11 and stores the exhaust heat in the storage water.

The inverter device 13 receives a direct-current (DC) voltage output from the fuel cell 34 and converts the DC voltage into a predetermined alternating-current (AC) voltage so as to output the AC voltage to a power line 16b connected to an alternating system power supply 16a (hereinafter simply referred to as a system power supply 16a) and an external electric power load 16c such as an electrical appliance, for example. The inverter device 13 also receives an AC voltage from the system power supply 16a via the power line 16b and converts the AC voltage into a predetermined DC voltage so as to output the DC voltage to an auxiliary machinery (each pump or blower) and the control unit 15. The control unit 15 drives the auxiliary machinery to thereby control the operation of the fuel cell system 1.

Next, the fuel supply pipe 11a is explained in detail. A shut-off valve 11a1 serving as an interruption device, a pressure sensor 11a2, a flow sensor 11a3, a pressure regulating device 11a4, a source material pump (i.e., fuel pump) 11a5, and a desulfurizer 11a6 are provided at the fuel supply pipe 11a in the mentioned order from an upstream side thereof. The shut-off valve 11a1, the pressure sensor 11a2, the flow sensor 11a3, the pressure regulating device 11a4, the fuel pump 11a5 and the desulfurizer 11a6 are housed or accommodated within the case 10a.

The shut-off valve 11a1 is configured to interrupt or block the supply of the source material. The shut-off valve 11a1 is a valve (double valves) that selectively opens and closes the fuel supply pipe 11a by a command from the control unit 15. The pressure sensor 11a2 detects a pressure of fuel (source material) supplied to the fuel cell 34 (specifically, pressure at a place where the pressure sensor 11a2 is positioned) and transmits a detection result to the control unit 15. The flow sensor 11a3 detects a flow rate, specifically, a flow rate per time unit, of the fuel (source material) supplied to the fuel cell 34 and transmits a detection result to the control unit 15.

The pressure regulating device 11a4 regulates the pressure of the source material introduced to the pressure regulating device 11a4 to a predetermined pressure and sends out the resulting source material. For example, the pressure regulating device 11a4 is constituted by a zero governor that regulates the pressure of the source material so that the source material at ambient pressure is sent out from the pressure regulating device 11a4. The pressure regulating device 11a4 operates so that the pressure of the fuel supply pipe 11a at a primary side relative to the fuel pump 11a5 is smaller than a pressure at a recycle gas pipe 39. The pressure regulating device 11a4 regulates the pressure of the fuel supply pipe 11a to be lower than the pressure of the recycle gas pipe 39 so that a reformed gas flows through the recycle gas pipe 39.

The fuel pump 11a5 serves as a source material (fuel) supply device for supplying the source material to the fuel cell 34. The fuel pump 11a5 adjusts a supply rate or a supply flow rate, specifically, a flow rate per time unit, of the source material from the supply source Gs based on a control command value from the control unit 15. The fuel pump 11a5 serves as a pumping device for pumping out the source material to a reforming portion 33.

The desulfurizer 11a6 removes a sulfur component (for example, a sulfur compound) in the source material by hydrogen and supplies the source material to the reforming portion 33. The desulfurizer 11a6 houses and accommodates therein a catalyst and a superhigh-order desulfurizing agent. In the catalyst, the sulfur compound and the hydrogen react each other to generate hydrogen sulfide. The catalyst is a nickel-molybdenum system or a cobalt-molybdenum system, for example. A copper-zinc system desulfurizing agent or a copper-zinc-aluminum system desulfurizing agent is usable as the superhigh-order desulfurizing agent, for example. The superhigh-order desulfurizing agent takes in the hydrogen sulfide that is converted from the sulfur compound at the catalyst so as to remove the hydrogen sulfide. Such superhigh-order desulfurizing agent exercises an improved desulfurizing performance at a high temperature of 200 °C to 300 °C (for example, 250 °C to 300 °C). Therefore, the desulfurizer 11a6 is arranged at a position at which the inside of the desulfurizer 11a6 is at the high temperature of 200 °C to 300 °C (for example, 250 °C to 300 °C). For example, the desulfurizer 11a6 is disposed within a casing 31 or at an outer surface of the casing 31.

In connection with the usage of the superhigh-order desulfurizing agent as the desulfurizing agent in the fuel cell system 1, a portion of the reformed gas reformed at the reforming portion 33 is configured to return to the fuel supply pipe 11a. Specifically, the recycle gas pipe 39 is provided for returning the reformed gas to the fuel supply pipe 11a. A first end of the recycle gas pipe 39 is connected to a reformed gas supply pipe 38 that supplies the reformed gas to the fuel cell 34 from the reforming portion 33. A second end of the recycle gas pipe 39 is connected to an upstream position at the fuel supply pipe 11a relative to the desulfurizer 11a6, specifically, to a position between a portion where the pressure regulating device 11a4 is disposed and a portion where the fuel pump 11a5 is disposed. Accordingly, a portion of the reformed gas flowing from the reforming portion 33 through the reformed gas supply pipe 38 returns to the fuel supply pipe 11a as recycle fuel by flowing through the recycle gas pipe 39.

Accordingly, because the portion of the reformed gas returns to the fuel supply pipe 11a, the hydrogen in the reformed gas is mixed with the source material and the resulting source material is sent and supplied to the superhigh-order desulfurizing agent within the desulfurizer 11a6 through the fuel supply pipe 11a. As a result, the sulfur compound within the source material reacts with the hydrogen to generate the hydrogen sulfide. The hydrogen sulfide is removed by the superhigh-order desulfurizing agent.

An orifice 39a is provided at the recycle gas pipe 39. A flow path bore is provided at the orifice 39a so that a flow rate of the reformed gas that returns through the recycle gas pipe 39 is adjusted by the flow path bore. The recycle gas pipe 39 is provided from the inside of the fuel cell module 11 at a high temperature because of a combustion portion 36 to the outside of the fuel cell module 11 at a lower temperature than the inside of the fuel cell module 11. Therefore, the temperature of the reformed gas at a relatively higher temperature within the fuel cell module 11 decreases when the reformed gas passes through the outside of the fuel cell module 11. The water vapor included in the reformed gas is condensed, thereby generating drain water (condensed water). In order that the drain water is inhibited from flowing to the fuel supply pipe 11a, a first end of a drain pipe 40 is disposed at the recycle gas pipe 39 so as to be positioned at the orifice 39a or at an upstream side thereof. In the recycle gas pipe 39, because the upstream side of the orifice 39a has a positive pressure, the drain water flows to the drain pipe 40 without flowing through the orifice 39a.

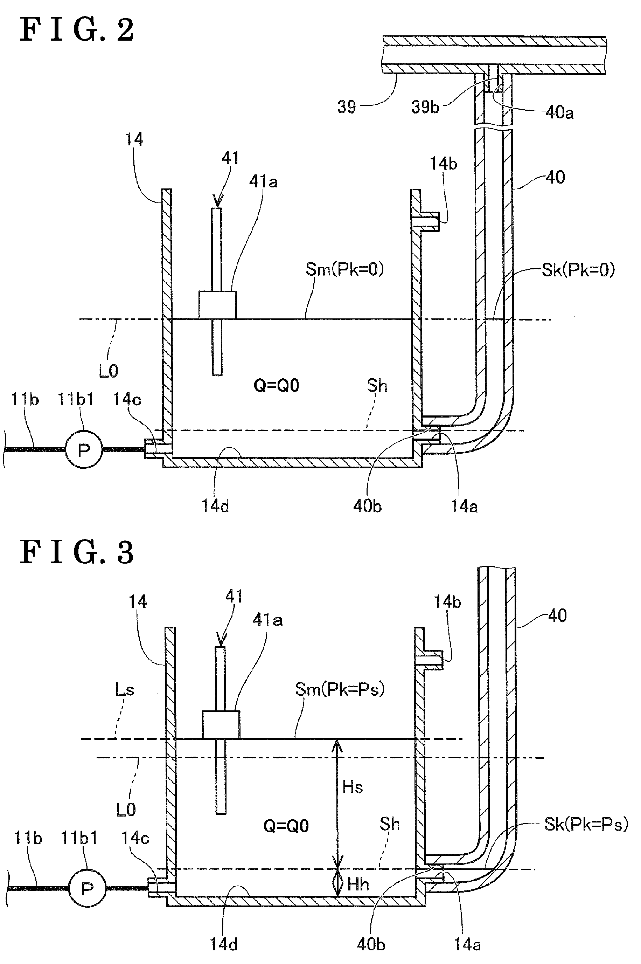

As illustrated in Fig. 2, the drain pipe 40 includes a drain water inlet port 40a at a first end and a drain water outlet port 40b at a second end. The drain water inlet port 40a takes in the drain water generated at the recycle gas pipe 39. The drain water outlet port 40b sends out the drain water. The drain water inlet port 40a is connected to an outlet port 39b of the recycle gas pipe 39. The drain pipe 40 is arranged extending downward at the first end (i.e., the drain water inlet port 40a). The second end of the drain pipe 40 is bent, i.e., the drain water outlet port 40b is bent, to be connected to the water tank 14. Accordingly, the drain water from the recycle gas pipe 39 is sent out to the water tank 14 by flowing through the drain pipe 40.

Next, the water tank 14 is explained in detail. The water tank 14 stores the reform water. The water tank 14 stores the condensed water from the heat exchanger 12 and the drain water from the drain pipe 40 as the reform water. The water tank 14 is formed in a tubular form including a bottom and opening upward. The water tank 14 includes a reform water inlet port 14a, a reform water discharge port 14b and a reform water outlet port 14c.

The reform water inlet port 14a is connected to the drain water outlet port 40b at a lower side than the drain water inlet port 40a so that the drain water from the drain pipe 40 is introduced to the inside of the water tank 14 as the reform water. The reform water inlet port 14a is provided extending horizontally at a lower end portion of a side wall of the water tank 14. The reform water discharge port 14b discharges the reform water stored at the water tank 14 to the outside. The reform water discharge port 14b is provided at an upper end portion of the side wall of the water tank 14 to be positioned at a lower side than the drain water inlet port 40a. The reform water outlet port 14c is connected to the water supply pipe 11b to send out the reform water in the water tank 14 to the water supply pipe 11b. The reform water outlet port 14c is provided at a lower end portion of a side wall of the water tank 14. Therefore, because retention of the reform water at a bottom portion of the water tank 14 is restrained, deterioration of quality of the reform water is restrained.

The water tank 14 is configured so that a water level thereof is adjustable to be equal to or greater than a predetermined water level Ls. In the disclosure, the water level is specified from a bottom surface 14d of the water tank 14 to a water surface Sm of the water tank 14. The predetermined water level Ls is adjusted so that the reformed gas flowing from the recycle gas pipe 39 to the drain pipe 40 is inhibited from flowing to the outside through the inside of the water tank 14. That is, the predetermined water level Ls is adjusted to be positioned at an upper side than the reform water inlet port 14a so that the reform water is stored also within the drain pipe 40, thereby constituting a water sealing construction for the reformed gas as illustrated in Figs. 3 to 5.

The predetermined water level Ls is, specifically, the water level of the water tank 14 in a case where the reformed gas at a predetermined pressure Ps is applied to a boundary surface Sk between the reformed gas and the reform water within the drain pipe 40 and the boundary surface Sk is positioned at the same height as a sealing water limit surface Sh. The predetermined pressure Ps is a pressure Pk of the reformed gas related to a maximum pressure. Specifically, the predetermined pressure Ps is obtained by multiplying the maximum pressure of the reformed gas by a safety factor. That is, the predetermined pressure Ps is the pressure Pk of the reformed gas equal to or greater than the maximum pressure of the reformed gas. The maximum pressure is a maximum value of pressure within a normal pressure range of the pressure Pk of the reformed gas during an operation of the fuel cell system 1. The sealing water limit surface Sh is a limit surface for the reformed gas not flowing into the water tank 14. That is, in a case where the boundary surface Sk is positioned at a lower side than the sealing water limit surface Sh, the reformed gas flows out to the outside form the drain pipe 40 through the water tank 14. In the embodiment, the sealing water limit surface Sh is a horizontal surface with the same height as an upper end of the reform water inlet port 14a.

A case where the reformed gas is not applied to the boundary surface Sk when a reform water volume Q serving as the volume of the reform water stored at the water tank 14 is equal to a limit water volume Q0 is explained. The limit water volume Q0 is a minimum value of the reform water volume Q (minimum reform water volume) with which the reformed gas is inhibited from flowing into the water tank 14 in a case where the reformed gas at the predetermined pressure Ps is applied to the boundary surface Sk. When the reformed gas is not applied to the boundary surface Sk, an atmospheric pressure is only applied to the water surface Sm of the water tank 14 and the boundary surface Sk. Thus, the water level of the water tank 14 and the boundary surface Sk are the same heights as each other at an initial water level L0 with the limit water volume Q0. In the aforementioned state, in a case where the reformed gas at the predetermined pressure Ps is applied to the boundary surface Sk, the reform water stands still in a state where the boundary surface Sk is positioned at the same height as the sealing water limit surface Sh and the water level of the water tank 14 turns to the predetermined water level Ls as illustrated in Fig. 3. In this case, the reform water at the water tank 14 blocks the reformed gas at the predetermined pressure Ps so that the reformed gas is inhibited from flowing out to the outside through the water tank 14.

In addition, in this case, a force applied to the boundary surface Sk (sealing water limit surface Sh) is balanced out. That is, in this case, the predetermined pressure Ps of the reformed gas and a pressure generated at the sealing water limit surface Sh by the reform water stored at the water tank 14 (= atmospheric pressure P0 + reform water density ρ x predetermined pressure conversion height Hs x gravity acceleration g) are balanced out. Thus, a formula (1) indicated below is established. The predetermined pressure conversion height Hs is the height from the boundary surface Sk to the water surface Sm and is obtained by replacement (conversion) of the predetermined pressure Ps with the height of the reform water stored at the water tank 14. In a case where the predetermined pressure Ps is calculated beforehand, the predetermined pressure conversion height Hs is obtained by the formula (1). Thus, the predetermined water level Ls may be calculated on a basis of a formula (2) as indicated below. A sealing water limit surface height Hh is the water level of the sealing water limit surface Sh.

$$(\text{Formula 1}) \quad \mathrm{Ps} = \mathrm{P0} + \rho \times \mathrm{Hs} \times \mathrm{g}$$

$$(\text{Formula 2}) \quad \mathrm{Ls} = \mathrm{Hs} + \mathrm{Hh}$$

In addition, a water level sensor 41 serving as a water level detection device is provided at the water tank 14. The water level sensor 41 detects the water level of the water tank 14. The water level sensor 41 is, for example, a reed switch type including a float 41a. The water level sensor 41 outputs an ON signal to the control unit 15 in a case where the water level of the water tank 14 is equal to or greater than the predetermined water level Ls and outputs an OFF signal to the control unit 15 in a case where the water level of the water tank 14 is smaller than the predetermined water level Ls. As being explained later, a case where the water level detected by the water level sensor 41 decreases below the predetermined water level Ls (i.e., a detection signal of the water level sensor 41 is the OFF signal) and a case where flowing-out of the reformed gas is not able to be inhibited are present. In such cases, the operation of the fuel cell system 1 is stopped.

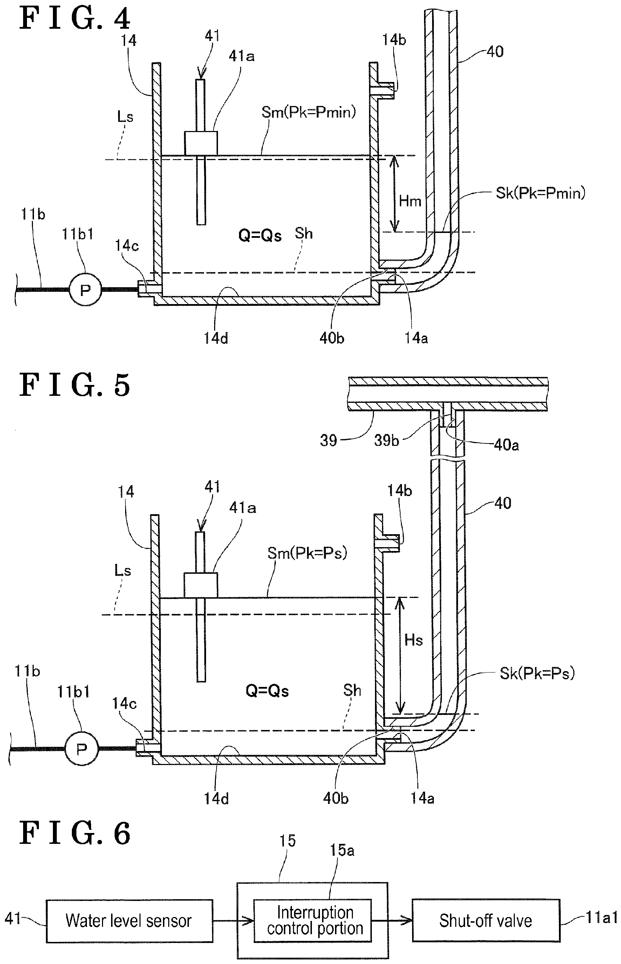

The pressure Pk of the reformed gas varies and fluctuates depending on changes in flow rate of the source material. Thus, in a case where the pressure Pk of the reformed gas decreases below the predetermined pressure Ps in the state illustrated in Fig. 3, the water level of the water tank 14 decreases below the predetermined water level Ls. In this case, even when the pressure Pk of the reformed gas falls within the normal pressure range, the operation of the fuel cell system 1 may be stopped. In order to inhibit such circumstances, in a case where the pressure Pk of the reformed gas varies within the normal pressure range, the reform water volume Q stored at the water tank 14 is adjusted before the operation of the fuel cell system 1 is started so that the water level of the water tank 14 is positioned at a higher position than the predetermined water level Ls. That is, as illustrated in Fig. 4, in a case where the reformed gas at a minimum pressure Pmin within the normal pressure range of the pressure Pk of the reformed gas is applied to the boundary surface Sk, the reform water volume Q is adjusted to a predetermined water volume Qs which is greater than the limit water volume Q0 so that the water level of the water tank 14 is positioned higher than the predetermined water level Ls. A minimum pressure conversion height Hm serving as a difference in height between the boundary surface Sk and the water surface Sm of the water tank 14 in a case where the reform water at the minimum pressure Pmin smaller than the predetermined pressure Ps is applied to the boundary surface Sk is smaller than the predetermined pressure conversion height Hs.

In addition, in a case where the reform water at the predetermined pressure Ps is applied to the boundary surface Sk in the state illustrated in Fig. 4, the boundary surface Sk decreases and the water level of the water tank 14 increases as illustrated in Fig. 5. At this time, the height from the boundary surface Sk to the water surface Sm of the water tank 14 corresponds to the predetermined pressure conversion height Hs. Because the reform water volume Q is specified to be the predetermined

water volume $Q_s$ greater than the limit water volume $Q_0$, the boundary surface $S_k$ is positioned at an upper side than the sealing water limit surface $S_h$ and the water surface $S_m$ of the water tank 14 is positioned at an upper side than the predetermined water level $L_s$.

Further, as illustrated in Fig. 5, the reform water discharge port 14b is provided at an upper side than the water level of the water tank 14 in a case where the reform water at the predetermined pressure $P_s$ is applied to the boundary surface $S_k$ with the predetermined water volume $Q_s$. In a case where the water level of the water tank 14 increases and reaches the reform water discharge port 14b by an increase of the reform water volume $Q$ caused by an increase of volume of the drain water from the recycle gas pipe 39 or volume of the condensed water from the heat exchanger 12, the reform water is discharged to the outside via the reform water discharge port 14b. Thus, the water level of the water tank 14 is restrained from increasing above the reform water discharge port 14b. On the other hand, the boundary surface $S_k$ varies in a range below the water level of the water tank 14 in response to variations of the water level of the water tank 14 as illustrated in Figs. 2 to 5. Therefore, the boundary surface $S_k$ is restrained from increasing above the position of the reform water discharge port 14b. As mentioned above, the reform water discharge port 14b is positioned at a lower side than the drain water inlet port 40a of the drain pipe 40. The boundary surface $S_k$ is thus inhibited from reaching the drain water inlet port 40a and the reform water is inhibited from flowing to the recycle gas pipe 39.

As illustrated in Fig. 1, the fuel cell module 11 includes the casing 31, an evaporating portion 32, the reforming portion 33 and the fuel cell 34. The casing 31 in a box form is made of an insulative material.

The evaporating portion 32 generates water vapor from the reform water. Specifically, the evaporating portion 32 heated by combustion gas (which is explained later) generates the water vapor by evaporating the reform water supplied to the evaporating portion 32. The evaporating portion 32 also preheats the source material supplied to the evaporating portion 32. The evaporating portion 32 mixes the water vapor generated in the aforementioned manner and the source material that is preheated so as to supply the mixture to the reforming portion 33. The source material corresponds to gaseous fuel (gaseous fuel for reforming) such as natural gas and liquefied petroleum gas (LP gas), for example, and liquid fuel (liquid fuel for reforming) such as kerosene, gasoline (petrol) and methanol, for example. In the present embodiment, the source material is the natural gas.

The evaporating portion 32 is connected to the first end of the water supply pipe 11b of which the second end (lower end) is connected to the reform water outlet port 14c of the water tank 14. In addition, the evaporating portion 32 is connected to the first end of the fuel supply pipe 11a of which the second end is connected to the supply source $G_s$. The supply source $G_s$ corresponds to a city gas supply pipe or an LP gas cylinder, for example.

The reforming portion 33 generates the reformed gas by the source material and the water vapor to supply the reformed gas to the fuel cell 34. The reforming portion 33 is heated by the combustion gas so as to receive heat necessary for a water vapor reforming reaction. The reforming portion 33 generates the reformed gas from mixed gas (source material and water vapor) supplied from the evaporating portion 32 and discharges the reformed gas. The inside of the reforming portion 33 is filled with a catalyst, for example, with a Ru catalyst or a Ni catalyst. The mixed gas supplied from the evaporating portion 32 reacts by means of the catalyst so as to be reformed, thereby generating hydrogen gas and gas containing carbon monoxide, for example (so-called a water vapor reforming reaction). The reformed gas includes hydrogen, carbon monoxide, carbon dioxide, water vapor, natural gas (methane gas) that is not reformed, and reform water (water vapor) not used for reforming. The water vapor reforming reaction is an endothermic reaction.

The fuel cell 34 generates an electric power by the reformed gas and oxidant gas. The fuel cell 34 includes a lamination of plural cells 34a each including a fuel electrode, an air electrode (an oxidant electrode), and an electrolyte disposed between the fuel electrode and the air electrode. The fuel cell 34 according to the present embodiment is a solid oxide fuel cell where zirconium oxide serving as a solid oxide is used as the electrolyte. The fuel electrode of the fuel cell 34 is supplied with hydrogen, carbon monoxide, and methane gas, for example, as the fuel.

A fuel flow path 34b through which the reformed gas serving as the fuel flows is formed at the fuel electrode of each of the cells 34a. An air flow path 34c through which the air (cathode air) serving as the oxidant gas flows is formed at the air electrode of each of the cells 34a. The fuel cell 34 generates an electric power with the fuel and the oxidant gas.

The fuel cell 34 is placed upon a manifold 35. The reformed gas is supplied from the reforming portion 33 to the manifold 35 via the reformed gas supply pipe 38. A lower end (first end) of the fuel flow path 34b is connected to a fuel lead-out port provided at the manifold 35. The reformed gas led out from the fuel lead-out port of the manifold 35 is introduced from the lower end of the fuel flow path 34b and is discharged from an upper end of the fuel flow path 34b. The cathode air sent from the cathode air blower 11c1 flows through the cathode air supply pipe 11c so as to be supplied from a lower end of the air flow path 34c and be discharged from an upper end of the air flow path 34c.

A combusting portion 36 is disposed among the fuel cell 34, the evaporating portion 32, and the reforming portion 33. The combusting portion 36 heats the reforming portion 33 by burning anode off-gas (fuel off-gas) from the fuel cell 34 and cathode off-gas (oxidant off-gas) from the fuel cell 34. The anode off-gas is burnt at the combusting portion 36 so as to generate flames 37. At the combusting portion 36, the anode-off gas is burnt to generate the exhaust combustion gas. In addition, the combusting portion 36 brings the temperature within the fuel cell module 11 to be an operation temperature of the fuel cell 34.

The control unit 15 at least controls the shut-off valve 11a1. The control unit 15 includes an interruption control portion 15a as illustrated in Fig. 6. The interruption control portion 15a interrupts or blocks the supply of the source material by the shut-off valve 11a1 in a case where the water level of the water tank 14 detected by the water level sensor 41 is lower than the predetermined water level Ls while the reformed gas is being introduced from the recycle gas pipe 39 to the drain pipe 40. In a start-up operation or a power generation operation of the fuel cell system 1, for example, the reformed gas is introduced to the drain pipe 40 from the recycle gas pipe 39. If the reformed gas at the predetermined pressure Ps is applied to the boundary surface Sk in a state where the water level of the water tank 14 is lower than the predetermined water level Ls, the reformed gas may flow out to the outside through the water tank 14. In order to inhibit such circumstances, the interruption control portion 15a interrupts the supply of the source material by the shut-off valve 11a1 in a case where the water level of the water tank 14 is lower than the predetermined water level Ls. When the supply of the source material is interrupted or blocked by the shut-off valve 11a1, the reformed gas is not generated by the reforming portion 33 and therefore the reformed gas is not supplied to the recycle gas pipe 39. Thus, the reformed gas is inhibited from being introduced to the drain pipe 40. The reformed gas is inhibited from flowing out to the outside through the water tank 14 accordingly.

In the first embodiment, the fuel cell system 1 includes the fuel cell 34 generating an electric power by the oxidant gas and the reformed gas including the hydrogen, the evaporation portion 32 generating the water vapor from the water for reforming (reform water), the reforming portion 33 generating the reformed gas by the source material and the water vapor and supplying the reformed gas to the fuel cell 34, the desulfurizer 11a6 removing the sulfur component contained in the source material by the hydrogen and supplying the source material in which the sulfur component is removed to the reforming portion 33, the recycle gas pipe 39 connecting between the reformed gas supply pipe 38 which supplies the reformed gas to the fuel cell 34 from the reforming portion 33 and the source material supply pipe 11a which supplies the source material to the desulfurizer 11a6, the recycle gas pipe 39 returning a portion of the reformed gas to the desulfurizer 11a6 as the recycle fuel, the drain pipe 40 including the drain water inlet port 40a at the first end and the drain water outlet port 40b at the second end, the drain water inlet port 40a introducing the drain water generated at the recycle gas pipe 39, the drain water outlet port 40b sending out the drain water, and the water tank 14 storing therein the reform water and connected to the drain water outlet port 40b at a lower side than the drain water inlet port 40a, the water tank 14 including the reform water inlet port 14a introducing therein the drain water as the reform water. The water tank 14 is configured in a manner that the water level of the water tank 14 is adjustable to be equal to or greater than the predetermined water level Ls. The predetermined water level Ls serves as the water level of the water tank 14 obtained in a case where the reformed gas at the predetermined pressure Ps related to the maximum pressure is applied to the boundary surface Sk between the reformed gas and the reform water within the drain pipe 40 and the boundary surface Sk is positioned at the same height as the sealing water limit surface Sh serving as the limit surface for the reformed gas not flowing into the water tank 14. Because the water level of the water tank 14 is adjusted to be equal to or greater than the predetermined water level Ls, the reformed gas is restrained from flowing out to the outside through the water tank 14 by the reform water stored at the water tank 14. That is, the water sealing construction for the reformed gas may be obtained by the water tank 14 and the drain pipe 40. Thus, a steam trap or a water sealing member such as a U-shaped tube, for example, as in a known art is not necessary. The number of components may be reduced to decrease a cost of the fuel cell system 1.

In addition, the drain water from the drain pipe 40 is not discharged to the outside as in a known art and is recovered at the water tank 14. Therefore, a water self-sustained operation of the fuel cell system 1 is achievable. The water self-sustained operation is an operation of the fuel cell system 1 that secures a water vapor volume necessary at the reforming portion 33 by the volume of reform water at the water tank 14, i.e., the volume of condensed water from the heat exchanger 12 and the volume of drain water from the recycle gas pipe 39, without an external water supply. That is, the water self-sustained operation is the operation of the fuel cell system 1 that may achieve the power generation operation without the external water supply to the water tank 14.

In addition, the fuel cell system 1 includes the water level sensor 41 detecting the water level of the water tank 14, the shut-off valve 11a1 provided at the source material supply pipe 11a and configured to interrupt the supply of the source material, and the control unit 15 controlling at least the shut-off valve 11a1. The control unit 15 includes the interruption control portion 15a interrupting the supply of the source material by the shut-off valve 11a1 in a case where the water level of the water tank 14 detected by the water level sensor 41 is smaller than the predetermined water level Ls in a state where the reformed gas is introduced to the drain pipe 40 from the recycle gas pipe 39. Accordingly, in a case where the water level of the water tank 14 decreases below the predetermined water level Ls in a state where the reformed gas is introduced to the drain pipe 40 from the recycle gas pipe 39, the supply of the source material is interrupted by the shut-off valve 11a1, thereby restraining the reformed gas within the recycle gas pipe 39 from flowing out to the outside.

Further, the water tank 14 includes the reform water discharge port 14b discharging the reform water which is stored within the water tank 14 to the outside, the reform water discharge port 14b being positioned at a lower side than the drain water inlet port 40a. Accordingly, even in a case where the boundary surface Sk within the drain pipe 40 increases by the increase of the volume of reform water, the boundary surface Sk is positioned at or below the reform water discharge port 14b. The reform water discharge port 14b is positioned at the lower side than the drain water inlet port 40a. Thus, the reform water is inhibited from flowing into the recycle gas pipe 39 and into the fuel supply pipe 11a from the drain water inlet port 40a. The auxiliary machinery such as the fuel pump 11a5, for example, provided at the fuel supply pipe 11a is restrained from being affected by the reform water.

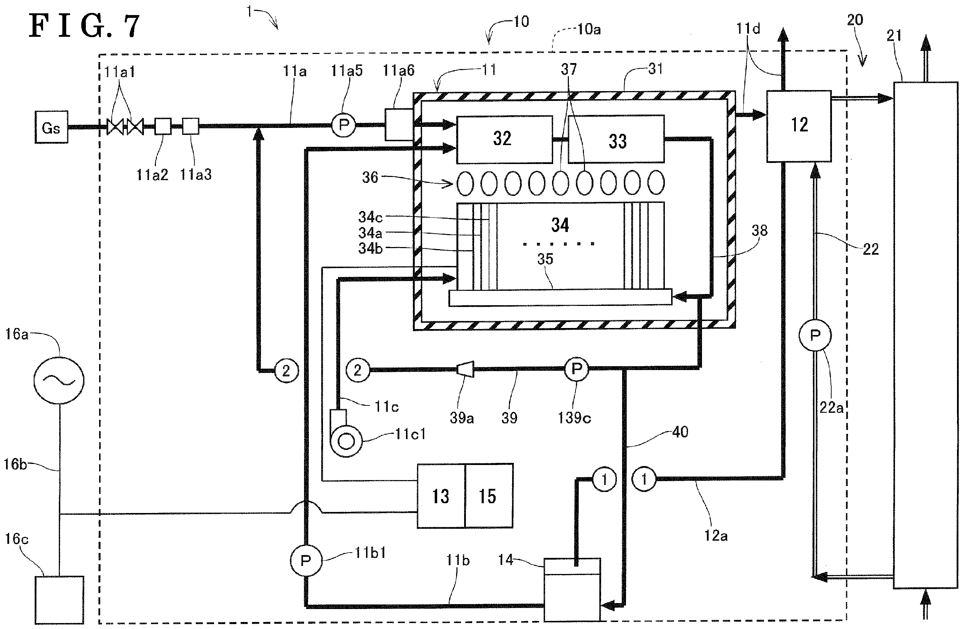

A second embodiment of the fuel cell system is explained. A different point of the second embodiment from the first embodiment is mainly discussed below. In the first embodiment, the pressure regulating device 11a4 is provided at the fuel supply pipe 11a for bringing the reformed gas to flow through the recycle gas pipe 39. In the second embodiment, as illustrated in Fig. 7, the fuel cell system 1 includes a reformed gas pump 139c instead of the pressure regulating device 11a4. The reformed gas pump 139c is provided at the recycle gas pipe 39 to be positioned at the upstream side relative to the orifice 39a. The reformed gas pump 139c serves as a pumping device for suctioning the reformed gas at the reformed gas supply pipe 38 to pump the reformed gas to the fuel supply pipe 11a via the recycle gas pipe 39. In this case, the fuel cell system 1 may not include the orifice 39a. According to the second embodiment, as compared to the first embodiment, the flow rate of reformed gas flowing through the recycle gas pipe 39 may be accurately controlled. The fluctuation of the pressure Pk of the reformed gas which flows through the recycle gas pipe 39 is restrained, thereby securely restraining the reformed gas from flowing out from the water tank 14.

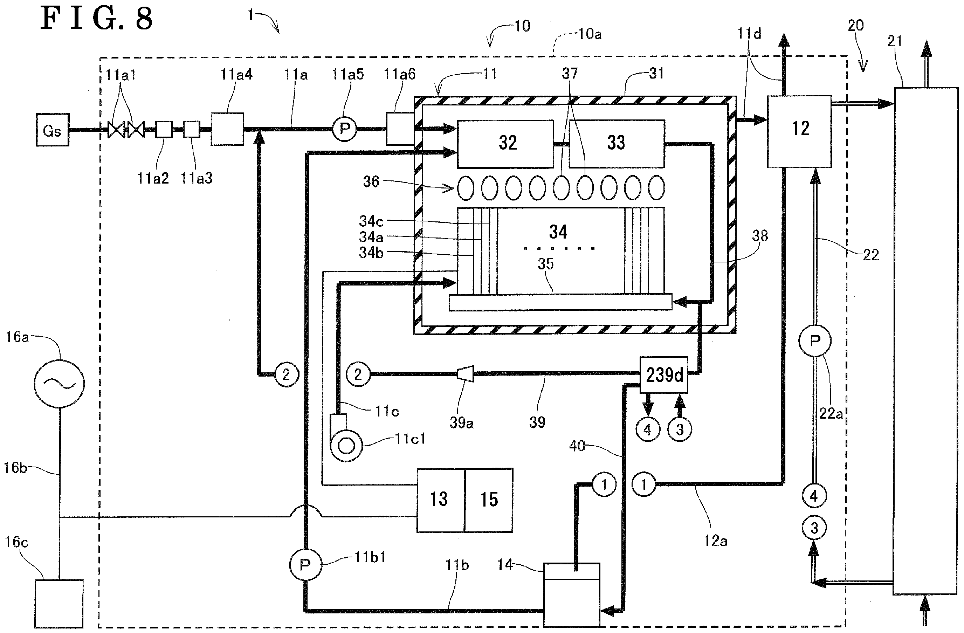

Next, a third embodiment of the fuel cell system is explained. A different point of the third embodiment from the first embodiment is mainly discussed below. The fuel cell system 1 of the third embodiment further includes a heat exchanger 239d as illustrated in Fig. 8. The heat exchanger 239d is disposed at the recycle gas pipe 39 for a heat exchange between the reformed gas flowing through the recycle gas pipe 39 and the storage water from the water storage tank 21. Because of the heat exchanger 239d, the water vapor in the reformed gas is condensed to generate the drain water. In the third embodiment, the drain pipe 40 is connected to the heat exchanger 239d to take in the drain water from the heat exchanger 239d. In the third embodiment, as compared to the first embodiment, a temperature of a cooling medium may be reduced to thereby increase the volume of drain water. The water self-sustained operation of the fuel cell system 1 may be further securely performed.

Each of the first to third embodiments is not limited to include the aforementioned construction and may include a different construction. For example, a water purifier may be provided at the drain pipe 40 so that the drain water is purified by means of ion-exchange resin. In addition, in each of the embodiments, the water level sensor 41 is the reed switch type water level sensor. Alternatively, an electrostatic capacitance type water level sensor may be employed.

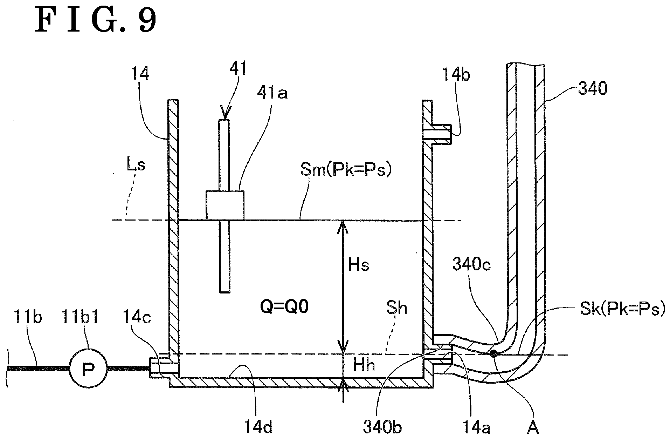

In each of the aforementioned embodiments, the sealing water limit surface Sh is configured to be positioned at the upper end of the reform water inlet port 14a. Alternatively, the sealing water limit surface Sh may be configured to be positioned at an inner peripheral surface of the drain pipe 40. In a modified example, instead of the drain pipe 40 in each of the embodiments, a drain pipe 340 is provided as illustrated in Fig. 9. Specifically, the drain pipe 340 is provided in a manner extending from the reform water inlet port 14a to a lower right side in Fig. 9 and in a manner that a lowest point A of an upper inner peripheral surface of a bending portion 340c is positioned at a lower side than the upper end of the reform water inlet port 14a. In this case, a horizontal plane including the lowest point A is the sealing water limit surface Sh. The predetermined water level Ls in the modified example is positioned at a lower side than the predetermined water level Ls in each of the embodiments.

In the third embodiment, the heat exchanger 239d is constructed so that the heat exchange is performed between the reformed gas and the storage water. Alternatively, the heat exchange may be performed between the reformed gas and the reform water flowing through the water supply pipe 11b or between the reformed gas and the cathode air flowing through the cathode air supply pipe. Within a scope of the disclosure, configurations of the water tank 14 and the drain pipe 40, for example, configurations and positions of the inlet ports 14a, 40a, outlet ports 14c, 39b, 40b, and the reform water discharge port 14b, for example, may be changed.

**Claims**

1. A fuel cell system (1) comprising:

   a fuel cell (34) generating an electric power by an oxidant gas and a reformed gas including a hydrogen;
   an evaporation portion (32) generating a water vapor from a water for reforming;
   a reforming portion (33) generating the reformed gas by a source material and the water vapor and supplying the reformed gas to the fuel cell (34);

a desulfurizer (11a6) removing a sulfur component contained in the source material by the hydrogen and supplying the source material in which the sulfur component is removed to the reforming portion (33);

a recycle gas pipe (39) connecting between a reformed gas supply pipe (38) which supplies the reformed gas to the fuel cell (34) from the reforming portion (33) and a source material supply pipe (11a) which supplies the source material to the desulfurizer (11a6), the recycle gas pipe (39) returning a portion of the reformed gas to the desulfurizer (11a6) as a recycle fuel;

a drain pipe (40) including a drain water inlet port (40a) at a first end and a drain water outlet port (40b) at a second end, the drain water inlet port (40a) introducing a drain water generated at the recycle gas pipe (39), the drain water outlet port (40b) sending out the drain water;

a water tank (14) storing therein water and connected to the drain water outlet port (40b) at a lower side than the drain water inlet port (40a), the water tank (14) configured in a manner that a water level of the water tank (14) is adjustable to be equal to or greater than a predetermined water level (Ls); and

a control unit (15),

**characterized by**

a water level detection device (41) detecting a water level of the water tank (14); and

an interruption device (11a1) provided at the source material supply pipe (11a) and configured to interrupt a supply of the source material, wherein

the water tank (14) includes a reform water inlet port (14a) introducing therein the drain water as the water for reforming,

the predetermined water level (Ls) serves as a water level of the water tank (14) obtained in a case where the reformed gas at a predetermined pressure (Ps) related to a maximum pressure is applied to a boundary surface (Sk) between the reformed gas and the water for reforming within the drain pipe (40) and the boundary surface (Sk) is positioned at a same height as a sealing water limit surface (Sh) serving as a limit surface for the reformed gas not flowing into the water tank (14), and

the control unit (15) includes an interruption control portion (15a) interrupting the supply of the source material by the interruption device (11a1) in a case where the water level of the water tank (14) detected by the water level detection device (41) is smaller than the predetermined water level (Ls) in a state where the reformed gas is introduced to the drain pipe (40) from the recycle gas pipe (39).

2. The fuel cell system (1) according to claim 1, wherein the water tank (14) includes a reform water discharge port (14b) discharging the water for reforming which is stored within the water tank (14) to an outside, the reform water discharge port (14b) being positioned at a lower side than the drain water inlet port (40a).

**Patentansprüche**

1. Brennstoffzellensystem (1) mit:

einer Brennstoffzelle (34), die durch ein Oxidationsmittelgas und ein Reformiergas, das Wasserstoff enthält, einen elektrischen Strom erzeugt;

einem Verdampfungsabschnitt (32), der aus Wasser zum Reformieren Wasserdampf erzeugt;

einem Reformierabschnitt (33), der das Reformiergas durch ein Ausgangsmaterial und den Wasserdampf erzeugt und das Reformiergas der Brennstoffzelle (34) zuführt;

einem Entschwefler (11a6), der durch den Wasserstoff einen Schwefelbestandteil entfernt, der in dem Ausgangsmaterial enthalten ist, und das Ausgangsmaterial, in dem der Schwefelbestandteil entfernt ist, dem Reformierabschnitt (33) zuführt;

einem Rückführungsgasrohr (39), das eine Verbindung zwischen einem Reformiergaszufuhrrohr (38), das der Brennstoffzelle (34) das Reformiergas vom Reformierabschnitt (33) zuführt, und einem Ausgangsmaterialzufuhrrohr (11a) herstellt, das dem Entschwefler (11a6) das Ausgangsmaterial zuführt, wobei das Rückführungsgasrohr (39) einen Teil des Reformiergases als einen Rückführungsbrennstoff zum Entschwefler (11a6) zurückschickt;

einem Ablassrohr (40), das an einem ersten Ende eine Ablasswassereinlassöffnung (40a) und an einem zweiten Ende eine Ablasswasserauslassöffnung (40b) aufweist, wobei die Ablasswassereinlassöffnung (40a) Ablasswasser einleitet, das am Rückführungsgasrohr (39) erzeugt wird, und die Ablasswasserauslassöffnung (40b) das Ablasswasser hinausschickt;

einem Wassertank (14), der darin Wasser speichert und mit der Ablasswasserauslassöffnung (40b) an einer tieferen Seite als die Ablasswassereinlassöffnung (40a) verbunden ist, wobei der Wassertank (14) auf eine solche Weise gestaltet ist, dass ein Wasserpegel des Wassertanks (14) so einstellbar ist, dass er gleich groß wie oder größer als ein vorbestimmter Wasserpegel (Ls) ist; und

einer Steuerungseinheit (15),

**gekennzeichnet durch**

eine Wasserpegelerfassungsvorrichtung (41), die einen Wasserpegel des Wassertanks (14) erfasst; und

eine Unterbrechungsvorrichtung (11a1), die am Ausgangsmaterialzufuhrrohr (11a) vorgesehen ist und so gestaltet ist, dass sie eine Zufuhr des Ausgangsmaterials unterbricht, wobei

der Wassertank (14) eine Reformwassereinlassöffnung (14a) aufweist, die darin das Ablasswasser als das Wasser zum Reformieren einleitet,

der vorbestimmte Wasserpegel (Ls) als ein Wasserpegel des Wassertanks (14) dient, der in einem Fall erzielt wird, in dem das Reformiergas bei einem vorbestimmten Druck (Ps) bezogen auf einen Maximaldruck auf eine Grenzfläche (Sk) zwischen dem Reformiergas und dem Wasser zum Reformieren im Ablassrohr (40) aufgebracht wird und die Grenzfläche (Sk) auf einer gleichen Höhe wie eine Sperrwassergrenzfläche (Sh) positioniert ist, die als eine Grenzfläche für das Reformiergas dient, das nicht in den Wassertank (14) strömt, und

die Steuerungseinheit (15) einen Unterbrechungssteuerungsabschnitt (15a) enthält, der durch die Unterbrechungsvorrichtung (11a1) die Zufuhr des Ausgangsmaterials in einem Fall unterbricht, in dem der durch die Wasserpegelerfassungsvorrichtung (41) erfasste Wasserpegel des Wassertanks (14) in einem Zustand, in dem das Reformiergas vom Rückführungsgasrohr (39) in das Ablassrohr (40) eingeleitet wird, kleiner als der vorbestimmte Wasserpegel (Ls) ist.

2. Brennstoffzellensystem (1) nach Anspruch 1, wobei der Wassertank (14) eine Reformwasserabgabeöffnung (14b) aufweist, die das Wasser zum Reformieren, das im Wassertank (14) gespeichert ist, nach Außen abgibt, wobei die Reformwasserabgabeöffnung (14b) auf einer tieferen Seite als die Ablasswassereinlassöffnung (40a) positioniert ist.

**Revendications**

1. Système de piles à combustible (1) comprenant :

une pile à combustible (34) générant une puissance électrique par un gaz oxydant et un gaz reformé comportant de l'hydrogène ;
une section d'évaporation (32) générant une vapeur d'eau à partir d'une eau de reformage ;
une section de reformage (33) générant le gaz reformé par un matériau source et la vapeur d'eau et acheminant le gaz reformé vers la pile à combustible (34) ;
un désulfurant (11a6) éliminant un constituant soufré contenu dans le matériau source par l'hydrogène et acheminant le matériau source dans lequel le constituant soufré est éliminé vers la section de reformage (33) ;
un tuyau de gaz de recyclage (39) connectant un tuyau d'acheminement de gaz reformé (38) qui achemine le gaz reformé vers la pile à combustible (34) à partir de la section de reformage (33) et un tuyau d'acheminement de matériau source (11a) qui achemine le matériau source vers le désulfurant (11a6), le tuyau de gaz de recyclage (39) restituant une partie du gaz reformé au désulfurant (11a6) en tant que combustible de recyclage ;
un tuyau de drainage (40) comportant un orifice d'entrée d'eau de drainage (40a) au niveau d'une première extrémité et un orifice de sortie d'eau de drainage (40b) au niveau d'une deuxième extrémité, l'orifice d'entrée d'eau de drainage (40a) introduisant une eau de drainage générée au niveau du tuyau de gaz de recyclage (39), l'orifice de sortie d'eau de drainage (40b) expulsant l'eau de drainage ;
une cuve d'eau (14) stockant à l'intérieur de celle-ci de l'eau et raccordée à l'orifice de sortie d'eau de drainage (40b) au niveau d'un côté plus bas que l'orifice d'entrée d'eau de drainage (40a), la cuve d'eau (14) étant configurée de manière qu'un niveau d'eau de la cuve d'eau (14) soit ajustable pour être égal ou supérieur à un niveau d'eau prédéterminé (Ls) ; et
une unité de commande (15),
**caractérisé par**
un dispositif de détection de niveau d'eau (41) détectant un niveau d'eau de la cuve d'eau (14) ; et
un dispositif d'interruption (11a1) prévu au niveau du tuyau d'acheminement de matériau source (11a) et configuré pour interrompre un acheminement du matériau source, dans lequel la cuve d'eau (14) comporte un orifice d'entrée d'eau de reformage (14a) introduisant dans celle-ci l'eau de drainage en tant qu'eau de reformage,
le niveau d'eau prédéterminé (Ls) sert de niveau d'eau de la cuve d'eau (14) obtenu dans un cas où le gaz reformé à une pression prédéterminée (Ps) en lien avec une pression maximale est appliqué sur une surface de séparation (Sk) entre le gaz reformé et l'eau de reformage au sein du tuyau de drainage (40) et la surface de séparation (Sk) est positionnée à la même hauteur qu'une surface de délimitation d'eau d'étanchéité (Sh) servant de surface de délimitation pour le gaz reformé qui ne s'écoule pas dans la cuve d'eau (14), et
l'unité de commande (15) comporte une section de commande d'interruption (15a) interrompant l'acheminement du matériau source par le dispositif d'interruption (11a1) dans un cas où le niveau d'eau de la cuve d'eau (14) détecté par le dispositif de détection de niveau d'eau (41) est plus petit que le niveau d'eau prédéterminé (Ls) dans un état où le gaz reformé est introduit dans le tuyau de drainage (40) à partir du tuyau de gaz de recyclage (39).

2. Système de piles à combustible (1) selon la revendication 1, dans lequel la cuve d'eau (14) comporte un orifice de décharge d'eau de reformage (14b) déchargeant l'eau de reformage qui est stockée au sein de la cuve d'eau (14) vers un extérieur, l'orifice de décharge d'eau de reformage (14b) étant positionné au niveau d'un côté plus bas que l'orifice d'entrée d'eau de drainage (40a).

F I G. 1

# FIG. 2

# FIG. 3

# F I G. 4

# F I G. 5

# F I G. 6

| 41 | Water level sensor | → | Interruption control portion 15 15a | → | Shut-off valve | 11a1 |

# FIG. 7

EP 3 147 981 B1

**F I G. 8**

F I G. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011159485 A

- EP 2840061 A1